# EUROPEAN PATENT APPLICATION

(11) **EP 1 022 173 A1**
(43) Date of publication of application: **26.07.2000**
(21) Application number: 98945581.1
(22) Date of filing: 01.10.1998
(51) Int. Cl.: B60J 5/04, B60J 1/17

(54) **FRONT DOOR STRUCTURE OF AUTOMOBILES**

(30) Priority: 08.10.1997 JP 27604997
(71) Applicant: Kabushiki Kaisha Toyoda Jidoshokki Seisakusho, Kariya-shi, Aichi-ken 448-0848 (JP); TOYOTA JIDOSHA KABUSHIKI KAISHA, Aichi-ken 471-8571 (JP)
(72) Inventor: SENGA, Tatsuya Toyoda Jidoshokki shokki Seisakusho, Kariya-shi Aichi 448-0848 (JP); TERAI, Hideaki K.K. Toyoda Jidoshokki Seisakusho, Kariya-shi Aichi 448-0848 (JP); HOZUMI, Mamoru K.K. Toyoda Jidoshokki Seisakusho, Kariya-shi Aichi 448-0848 (JP); FUKUTA, Kinsho, Toyota-shi Aichi 471-8571 (JP)
(74) Representative: Desrousseaux, Grégoire Marie
(86) International application number: JP9804453
(87) International publication number: WO9917946

(57) **Abstract**

A front door structure of automobiles, in which a front lower frame can be positioned toward the front of a door inside space to reduce an out-of-vision range by an occupant. Specifically, a front door structure for automobiles comprising a front lower frame (6) and a rear frame (7) disposed in opposed relationship on front and rear sides in a bag-shaped door main body (1a) and guiding a vertical movement of a window glass (5), wherein an expended space (9) is provided on a hinge side panel (4) defining the front portion of the door main body (1a) to expand the inner space in the door main body (1a) forward. The front lower frame (6) is located in the expanded space (9) in such a manner as to have its lower end entering the expanded space, whereby the front lower frame (6) can be positioned toward the front of the door main body (1a).

## Description

### FIELD OF THE INVENTION

The present invention relates to a vehicle front door structure, and more particularly to a structure for guiding vertical movement of a window glass.

### BACKGROUND OF THE INVENTION

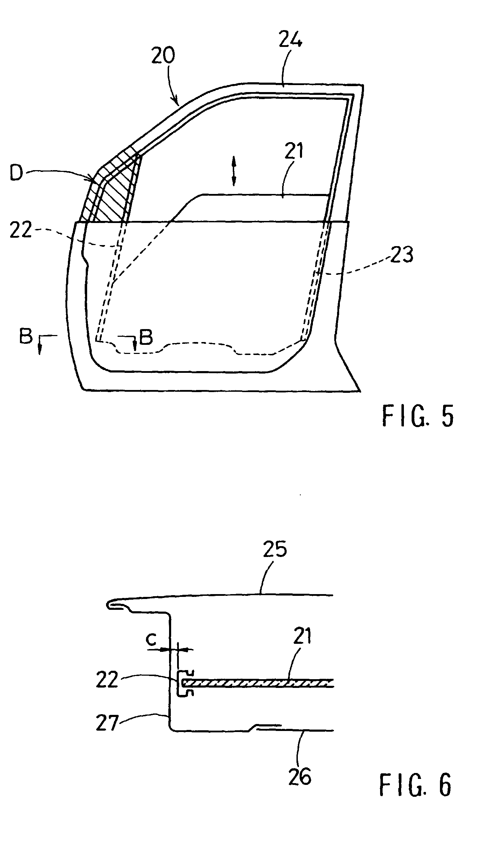

FIG. 5 shows a known vehicle front door 20. The front door 20 has a front lower frame (guide rail) 22 and a rear frame (guide rail) 23, both of which have a generally U-shaped section for guiding vertical movement of a window glass 21. An upper end of the front lower frame 22 is welded to a main frame 24, which extends downward therefrom, and is joined at an intermediate portion thereof to a door panel through a bracket (not shown).

FIG. 6 is a sectional view taken along line B-B in FIG. 5. An outer door panel 25 and an inner door panel 26 are joined to each other via a hinged side panel 27 on the front side of the door panels.

In such a door structure in which the front lower frame 22 and the rear frame 23 are used as a guide for raising and lowering the window glass 21, the front lower frame 22 is disposed in a spaced relationship from the hinge side panel 27 and has a predetermined spacing C or more (see FIG. 6) to avoid interference with the hinge side panel 27. As a result, a space D (the diagonally shaded area in FIG. 5) is defined between the front lower frame 22 and the main frame 24 and is covered by a structural member, thereby obstructing the passenger's view to the front.

Therefore, as shown in FIG. 5, in the structure in which the frames 22 and 23 are tilted rearward, if the hinge side panel 27 extends in a generally upright manner, the upper end of the front lower frame 22 is located relatively toward the rear, because the position of the lower end of the front lower frame 22 is restricted by the hinge side panel surface. Consequently, the space D between the front lower frame 22 and the main frame 24 is enlarged. As a result, the area of obstructed passenger view to the front is enlarged.

The present invention has been made in view of the above problem, and its object is to provide a front door structure in which a front lower frame can be located farther toward the front within a hollow portion of the door in order to minimize the passenger's obstructed view.

### DISCLOSURE OF THE INVENTION

In order to solve the above-described problem, a first aspect of the present invention provides a vehicle front door structure having a front lower frame and a rear frame adapted for guiding vertical movement of a window glass and opposedly disposed forward and rearward, respectively, within a hollow door body portion, wherein a distended portion is formed by enlarging an inner space of the door body portion forward of a location corresponding to a lower end of the front lower frame in a front portion of the door body portion, and wherein the front lower frame is disposed with its lower end received within the distended portion.

In this case, as disclosed in a second aspect of the invention, the distended portion may be formed by drawing a hinge side panel, which constitutes the front portion of the door body portion. Alternatively, as disclosed in a third aspect of the invention, the distended portion may be formed by joining a forwardly distended panel to an opening in the hinge side panel, thereby closing the opening in the panel.

According to the first to third aspects of the invention, the front lower frame can be disposed farther toward the front within the door body portion, as compared with the known door structure. Thus, the obstructed viewing area between the upper portion of the front lower frame and the main frame of the window frame portion can be minimized, so that the passenger's view to the front can be improved.

### BRIEF DESCRIPTION OF THE DRAWINGS

FIG. 1 is a schematic plan view showing an entire right front door of a vehicle according to a first embodiment of the invention as seen from the interior of the vehicle;
FIG. 2 is a sectional view taken along line A-A in FIG. 1;
FIG. 3 is an explanatory view showing the positional arrangement of a front lower frame;
FIG. 4 is a sectional view showing a second embodiment of the invention;
FIG. 5 is a schematic plan view showing an entire known right front door as seen from the interior of the vehicle; and
FIG. 6 is a sectional view taken along line B-B in FIG. 5.

### EMBODIMENTS OF THE INVENTION

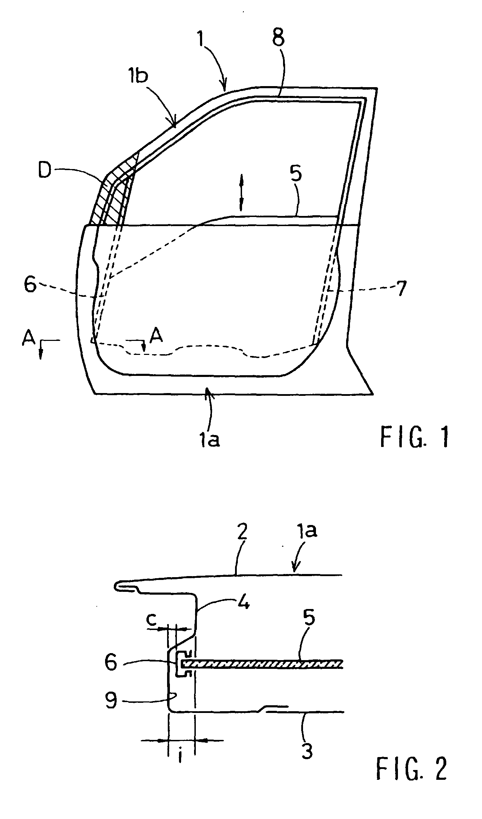

Embodiments of the present invention will now be explained in detail with reference to the drawings. First, a first embodiment will be explained with reference to FIGS. 1 to 3. FIG. 1 is a schematic plan view showing the entire right front door of a vehicle as seen from the interior of the vehicle. FIG. 2 is a sectional view taken along line A-A in FIG. 1. A front door 1 includes a door body portion 1a and a window frame portion 1b. An outer door panel 2 and an inner door panel 3 are joined together primarily by hemming, forming an integral hollow structure in the door body portion 1a. The window frame portion 1b is attached to the top of the door body portion 1a.

The front portion of the door body portion 1a is comprised of a hinge side panel 4. The hinge side panel 4 is joined to the inner door panel 3 by welding and to the outer door panel 2 by hemming. An inner space of the door body portion 1a accommodates a window regulator (not shown) for raising and lowering a window glass 5, a front lower frame (guide rail) 6 and a rear frame (guide rail) 7, both of which have a generally U-shaped section for guiding vertical movement of the window glass 5.

The front lower frame 6 is disposed parallel to the rear frame 7. The front lower frame 6 is joined to and supported by the inner door panel 3 through a bracket (not shown) at an intermediate portion, a lower end or other appropriate portions thereof within the door body portion 1a. The front lower frame 6 projects upward from the inside of the door body portion 1a with its upper end welded to a main frame 8 that constitutes the window frame portion 1b.

In such a front door structure, as shown in FIG. 2, a distended portion 9 is formed by forwardly enlarging the inner space of the door body portion 1a and is located in a position corresponding to a lower portion of the hinge side panel 4, and particularly to a lower end of the front lower frame 6. The hinge side panel 4 is typically formed by drawing, and during such a drawing process, the distended portion 9 is integrally formed therewith.

Further, the hinge side panel 4 normally has mounting bases for mounting a pair of upper and lower door hinges (not shown) that are used to pivotally attach the door 1 to the vehicle and also has a mounting base for mounting a door check (not shown) for restricting pivotal movement of the door 1. Therefore, in this embodiment, the distended portion 9 is disposed in consideration of the positional relationship with respect to the hinge mounting bases (which are typically disposed near the outer door panel 2) and the door check mounting base (which is typically disposed near the inner door panel 3 and in a generally intermediate position in the vertical direction of the hinge side panel 4). Specifically, the distended portion 9 is disposed in a location where it does not interfere with these mounting bases, that is, as shown in FIG. 2, adjacent to the inner door panel and below the door check mounting base.

As shown in FIG. 1, in a structure in which the front and rear frames 6 and 7 are tilted rearward, if the front lower frame 6 is disposed in the inner space of the door body portion 1a, it is necessary to keep a predetermined spacing C or more between the front lower frame 6 and the hinge side panel 4 in order to prevent the lower end of the front lower frame 6 from interfering with the hinge side panel 4 and thus producing undesired noises.

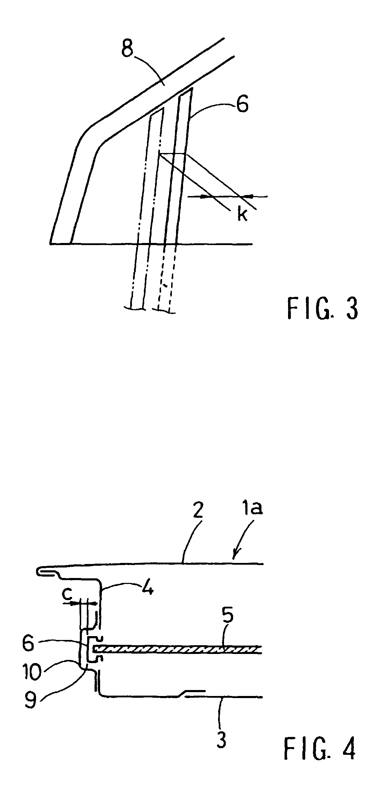

In this embodiment, a portion of the inner space of the door body portion 1a that corresponds in position to the lower end of the front lower frame 6 is forwardly enlarged to form the distended portion 9 in the hinge side panel 4. As a result, as shown in FIG. 3, the front lower frame 6 can be shifted and positioned farther forward by a distance k, which is equal to the forwardly enlarged amount i (shown in FIG. 2) of the distended portion 9.

Consequently, the space D defined between the front lower frame 6 and the main frame 8, that is, the obstructed viewing area (the diagonally shaded area in FIG. 1) of the passenger's view to the front, can be smaller as compared with the known front door. Thus, the passenger's vision can be improved.

Next, a second embodiment of the present invention will be explained with reference to FIG. 4. In this embodiment, the hinge side panel 7 is formed with an opening 4a of an appropriate shape. A generally dish-like panel 10, which is forwardly enlarged, is joined to the front surface of the hinge side panel 4 by spot welding such that it closes the opening 4a, thereby forming the distended portion 9 therein. The remainder of the structure is the same as the first embodiment.

Also in the second embodiment thus constructed, the front lower frame 6 is disposed with its lower end received within the distended portion 9, so that the front lower frame 6 can be located farther toward the front. Thus, the same effect as in the first embodiment can be obtained.

### INDUSTRIAL APPLICABILITY

As described above in detail, a front door structure according to the present invention is effective in minimizing the obstructed viewing area of the passenger's view, which is defined between the upper portion of the front lower frame and the main frame of the window frame portion, thereby improving the passenger's vision. This front door structure is applicable to various types of vehicles.

## Claims

1. A vehicle front door structure having a front lower frame and a rear frame adapted for guiding vertical movement of a window glass and opposedly disposed forward and rearward, respectively, within a hollow door body portion, wherein:
a distended portion is formed by forwardly enlarging an inner space of the door body portion at a location corresponding to a lower end of the front lower frame in a front portion of the door body portion, and the front lower frame is disposed with its lower end received within the distended portion.

2. The front door structure as defined in claim 1, wherein the distended portion is formed by drawing a hinge side panel which constitutes the front portion of the door body portion.

3. The front door structure as defined in claim 1, wherein the distended portion is formed by joining an opening in the hinge side panel to a forwardly enlarged panel, thereby closing the opening in the panel.
